# EUROPEAN PATENT APPLICATION

(11) **EP 4 496 264 A1**
(43) Date of publication of application: **22.01.2025**
(21) Application number: 23186532.0
(22) Date of filing: 19.07.2023
(51) Int. Cl.: H04L 9/40, G06F 3/06, H04L 67/1097, H04L 67/12, H04W 4/48

(54) **NETWORK BLOCK DEVICE PROTOCOL**

(71) Applicant: Aptiv Technologies AG, 8200 Schaffhausen (CH)
(72) Inventor: PETIG, Christof, 42369 Wuppertal (DE); BEIER, Ralf Anton, 42287 Wuppertal (DE)
(74) Representative: Bardehle Pagenberg Partnerschaft mbB Patentanwälte Rechtsanwälte

(57) **Abstract**

The subject disclosure pertains to communication between electronic devices (ECUs, ECMs, central control units) in a vehicle. For example, the subject disclosure provides an electronic device in the vehicle, comprising at least one processor and at least one memory including program code. The program code causes the electronic device, when executed with the at least one processor, to: configure the interface to communicate with a controller in the vehicle over a transport protocol; configure the electronic device to be accessible to the controller over the interface as a block device; upon receiving, from the controller, a request to access the block device over the transport protocol: read data from the block device; and transmit, to the controller, the data over the transport protocol.

## Description

### FIELD

The subject disclosure generally relates to electronic devices in a vehicle. More specifically, the subject disclosure relates to an electronic device in the vehicle that communicates with another electronic device and methods for communication in the vehicle.

### BACKGROUND

In recent years, developments in the automotive sector have progressed rapidly, leading in particular to more and more electronic systems finding their way into vehicles. The electronic systems do not only serve to control and manage vehicle functions such as the engine of the vehicle, but also increasingly to support the driver in driving the vehicle and even for automatic or autonomous driving. Such advanced functions and technologies require a considerable number of different electronic systems to work together. To achieve this, the electronic systems are interconnected to each other by means of vehicle buses. Examples of vehicle buses are CAN and LIN.

The electronic systems in a vehicle also include low-cost components with limited capabilities and performance. Interconnecting and networking is a particular challenge for such components, as only simple protocols can be implemented or supported for communication via the vehicle bus. As a result, maintenance and updating of such components may pose technical challenges.

The subject disclosure addresses such drawbacks and provides for solutions to improve manageability and updating of such electronic components in a vehicle.

### SUMMARY

The subject disclosure is directed to improve management and operation of electronic devices such as electronic control units (ECU) or electronic control modules (ECM) in a vehicle. The main aspects are set out by the independent claims.

According to a first aspect of the subject disclosure, an electronic device in a vehicle is provided. The electronic device comprises at least one processor and at least one memory including program code. The program code causes the electronic device, when executed with the at least one processor, to: configure the interface to communicate with a controller in the vehicle over a transport protocol; configure the electronic device to be accessible to the controller over the interface as a block device; upon receiving, from the controller, a request to access the block device over the transport protocol: read data from the block device; and transmit, to the controller, the data over the transport protocol.

In some examples of the first aspect, the program code may cause the electronic device, when executed with the at least one processor, to: upon receiving, from the controller, the request to access the block device over the transport protocol: receive data from the controller over the transport protocol; and write the data to the block device.

In some examples of the first aspect, the data may comprise software code and the program code may cause the electronic device, when executed with the at least one processor, to: flash to the block device with the software code.

In some examples of the first aspect, the program code may cause the electronic device, when executed with the at least one processor, to: upon receiving, from the controller, the request to access the block device over the transport protocol: perform a handshake procedure to establish a session for accessing the block device between the electronic device and the controller.

In some examples of the first aspect, the program code may cause the electronic device, when executed with the at least one processor, to: perform a de-/encryption procedure to de-/encrypt the data using an encryption key shared by the electronic device and the controller. For example, the program code may cause the electronic device, when executed with the at least one processor, to: perform a decryption procedure to decrypt the data received from the controlled over the transport protocol using an encryption key shared by the electronic device and the controller. In another example, the program code may cause the electronic device, when executed with the at least one processor, to: perform an encryption procedure to encrypt the data to be transmitted to the controller over the transport protocol using an encryption key shared by the electronic device and the controller.

In some examples of the first aspect, the program code may cause the electronic device, when executed with the at least one processor, to: use a cryptographic protocol such as a Transport Layer Security (TLS) based protocol.

In some examples of the first aspect, the electronic device may further comprise: one or more physical or logical storage devices. In these examples, the program code may cause the electronic device, when executed with the at least one processor, to: configure the one or more physical or logical storage device to be accessible as the block device.

In some examples of the first aspect, the program code may cause the electronic device, when executed with the at least one processor, to: configure the electronic device to use a network block protocol to be accessible over the interface.

In some examples of the first aspect, the data may comprise one or more blocks of bytes of a fixed block size.

In some examples of the first aspect, the electronic device may comprise an electronic control module (ECM) for controlling one or more electrical systems in the vehicle, the ECM being embedded in the vehicle. In some examples of the first aspect, the controller may comprise a central vehicle controller.

In some examples of the first aspect, the transport protocol may comprise one of: a transport protocol different than the Transmission Control Protocol (TCP) and a transport protocol according to the ISO standard ISO 15765-2. In some examples of the first aspect, the vehicle bus may comprise a Controller Area Network (CAN) or a Local Interconnect Network (LIN).

In some examples of the first aspect, the interface may comprise one of: an interface being incompatible with TCP, an interface compatible with the transport protocol according to the ISO standard ISO 15765-2, and an interface compatible with CAN or LIN.

In some examples of the first aspect, the program code may further cause the electronic device, when executed with the at least one processor, to: receive, from the controller in response to transmitting the data, a single byte response having a byte value; determine whether the byte value matches a byte value reserved according to the transport protocol for an acknowledgment of reception of the transmitted data or for indicating a valid transmission of the data; and responsive to determining the match, transmit additional data over the transport protocol.

In some examples of the first aspect, the program code further causes the electronic device, when executed with the at least one processor, to: configure the electronic device to provide debugging information associated with a software component executed with the at least one processor of the electronic device over the interface; upon receiving, from the controller, a request to provide the debugging information: transmit, to the controller, the debugging information over the transport protocol.

According to a second aspect of the subject disclosure, an electronic device in a vehicle is provided. The electronic device comprises at least one processor and at least one memory including program code. The program code causes the electronic device, when executed with the at least one processor, to: configure an interface of an electronic device to communicate with a controller in the vehicle over a transport protocol; configure the electronic device to provide debugging information associated with a software component executed with the at least one processor of the electronic device over the interface; upon receiving, from the controller, a request to provide the debugging information: transmit, to the controller, the debugging information over the transport protocol.

In some examples of the second aspect, the electronic device may implement one or more of the examples of the first aspect.

According to a third aspect of the subject disclosure, a computer-implemented method for communication in a vehicle is provided. The method comprises: configuring an interface of an electronic device to communicate with a controller in the vehicle over a transport protocol; configuring the electronic device to be accessible to the controller over the interface as a block device; upon receiving, from the controller, a request to access the block device over the transport protocol: reading data from the block device; and transmitting, to the controller, the data over the transport protocol.

According to a fourth aspect of the subject disclosure, a computer-implemented method for communication in a vehicle is provided. The method comprises: configuring an interface of an electronic device to communicate with a controller in the vehicle over a transport protocol; configuring the electronic device to provide debugging information associated with a software component executed by the electronic device over the interface; upon receiving, from the controller, a request to provide the debugging information: transmitting, to the controller, the debugging information over the transport protocol.

According to a fifth aspect of the subject disclosure, an electronic device in a vehicle is provided. The electronic device comprises at least one processor and at least one memory including program code. The program code causes the electronic device, when executed with the at least one processor, to: generate one or more messages according to a network block protocol to act, towards (or vis-a-vis) a controller of the vehicle, as a network block device; generate one or more frames according to a transport protocol based on the one or more messages according to the network block protocol; and transmit the one or more frames through a vehicle bus to the controller.

In some examples of the fifth aspect, the electronic device may comprise an interface to couple the electronic device to the vehicle bus. The interface may be an interface not compatible with Transmission Control Protocol (TCP)/Internet Protocol (IP).

In some examples of the fifth aspect, the electronic device may comprise one or more physical or logical storage devices. The one or more messages according to the network block protocol are to provide access to the one or more physical or logical storage devices. Thereby, the electronic device acting the network block device is enabled to provide access to the one or more physical or logical storage devices.

In some examples of the fifth aspect, the program code may cause the electronic device, when executed with the at least one processor, to: receive, from the controller, a request to access the electronic device. The one or more messages according to the network block protocol are generated responsive to receiving the request. In some examples, the request to access the electronic device may comprise one or more of: a request to read one or more blocks from the electronic device, and a request to write one or more blocks to the electronic device, wherein the one or more blocks comprises blocks of bytes of a fixed block size.

In some examples of the fifth aspect, the program code may cause the electronic device, when executed with the at least one processor, to: perform a handshake procedure to establish a session between the electronic device and the controller responsive to receiving a connection request from the controller. The one or more messages according to the network block protocol are associated with the session.

In some examples of the fifth aspect, the program code may cause the electronic device, when executed with the at least one processor, to: encrypt the one or more messages according to the network block protocol using an encryption key shared by the electronic device and the controller. The one or more frames are generated based on the encrypted messages. For example, the one or more messages may be encrypted using a cryptographic protocol such as a Transport Layer Security (TLS) based protocol.

In some examples of the fifth aspect, the vehicle bus may comprise a low-cost bus used in automotive environments such as a Controller Area Network (CAN), CAN Flexible Data-Rate (CAN-FD), CAN Extra Long (CAN-XL) or a Local Interconnect Network (LIN).

In some examples of the fifth aspect, the electronic device may comprise an electronic control unit (ECU) or an electronic control module (ECM) for controlling one or more electrical systems in the vehicle. The ECU or ECM is embedded in the vehicle. In some examples of the fifth aspect, the controller may comprise a central vehicle controller.

In some examples of the fifth aspect, the transport protocol comprises a transport layer protocol and is to transport the one or more messages over the vehicle bus. An example of the transport protocol comprises a transport protocol according to, or based on, the ISO standard ISO 15765-2 or a derivative thereof.

In some examples of the fifth aspect, the program code may cause the electronic device, when executed with the at least one processor, to: receive, from the controller in response to transmitting one of the one or more frames, a single byte response having a byte value; determine whether the byte value matches a byte value reserved according to the transport protocol for an acknowledgment of reception of the transmitted frame or for indicating a valid frame; and responsive to determining the match, transmitting another frame of the one or more frames.

In some examples of the fifth aspect, the program code may cause the electronic device, when executed with the at least one processor, to: generate one or more messages according to a remote debugging protocol to provide, to the controller, debugging information associated with a software component executed with the at least one processor of the electronic device; and generate the one or more frames to be transmitted to the controller based on the one or more messages according to the remote debugging protocol.

In some examples of the fifth aspect, the program code further causes the electronic device, when executed with the at least one processor, to: implement a protocol stack comprising an application layer, a transport layer and a physical layer; provide, at the application layer, the network block protocol with a first service to generate the one or more messages according to the network block protocol; provide, at the transport layer, the transport protocol with a second service to generate the one or more frames; and provide, at the physical layer, a vehicle bus protocol with a third service to transmit the one or more frames through the vehicle bus.

According to a sixth aspect of the subject disclosure, an electronic device in a vehicle is provided. The electronic device comprises at least one processor and at least one memory including program code. The program code causes the electronic device, when executed with the at least one processor, to: generate one or more messages according to a remote debugging protocol to provide, to a controller of the vehicle, debugging information associated with a software component executed with the at least one processor of the electronic device; generate one or more frames according to a transport protocol based on the one or more messages according to the remote debugging protocol; and transmit the one or more frames through a vehicle bus to the controller.

In some examples of the sixth aspect, the electronic device may implement one or more of the examples of the fifth aspect.

According to a seventh aspect of the subject disclosure, an electronic device in a vehicle is provided. The electronic device comprises at least one processor and at least one memory including program code. The program code causes the electronic device, when executed with the at least one processor, to: implement a protocol stack comprising an application layer, a transport layer and a physical layer; provide, at the application layer, a network block protocol with a first service to generate one or more messages according to the network block protocol to act, towards a controller of the vehicle, as a network block device; provide, at the transport layer, a transport protocol with a second service to generate one or more frames according to the transport protocol based on the one or more messages according to the network block protocol; and provide, at the physical layer, a vehicle bus protocol with a third service to transmit the one or more frames through a vehicle bus to the controller.

In some examples of the seventh aspect, the electronic device may implement one or more of the examples of the fifth aspect.

According to an eight aspect of the subject disclosure, a computer-implemented method for communication in a vehicle is provided. The method comprises: generating, at an electronic device of the vehicle, one or more messages according to a network block protocol to act, towards a controller of the vehicle, as a network block device; generating, at the electronic device, one or more frames according to a transport protocol based on the one or more messages according to the network block protocol; and transmitting, from the electronic device to the controller, the one or more frames through a vehicle bus.

According to a nineth aspect of the subject disclosure, a computer-implemented method for communication in a vehicle is provided. The method comprises: generating, at an electronic device of the vehicle, one or more messages according to a remote debugging protocol to provide, to a controller of the vehicle, debugging information associated with a software component of the electronic device; generating, at the electronic device, one or more frames according to a transport protocol based on the one or more messages according to the remote debugging protocol; and transmit, from the electronic device to the controller, the one or more frames through a vehicle bus.

According to a tenth aspect of the subject disclosure, a computer-implemented method for communication in a vehicle is provided. The method comprises: implementing a protocol stack comprising an application layer, a transport layer and a physical layer; providing, at the application layer, a network block protocol with a first service to generate one or more messages according to the network block protocol to act as a network block device; providing, at the transport layer, a transport protocol with a second service to generate one or more frames according to the transport protocol based on the one or more messages according to the network block protocol; and providing, at the physical layer, a vehicle bus protocol with a third service to transmit the one or more frames through a vehicle bus.

According to an eleventh aspect, a computer program product is provided. The computer program product comprises instructions which, when executed by a computer, cause the computer to carry out the method according to one or more of the third, fourth, and eight to tenth aspect and embodiments thereof.

According to a twelfth aspect, a computer-readable data carrier is provided. The computer-readable data carrier has stored thereon the computer program product of the eleventh aspect.

This summary is intended to provide a brief overview of some of the aspects and features according to the subject disclosure. Accordingly, it will be appreciated that the above-described features are merely examples and should not be construed to narrow the scope of the subject disclosure in any way. Other features, aspects, and advantages of the subject disclosure will become apparent from the following detailed description, drawings, and claims.

### BRIEF DESCRIPTION OF THE FIGURES

A better understanding of the subject disclosure can be obtained when the following detailed description of various exemplary embodiments is considered in conjunction with the accompanying drawings, in which:
FIG. 1 illustrates a vehicle with various electronic components according to one embodiment of the subject disclosure.
FIG. 2 illustrates a block diagram for the various electronic components of the vehicle shown in FIG. 1 according to one embodiment of the subject disclosure.
FIG. 3 illustrates electronic components of the vehicle shown in FIG. 1 interconnected via a communication bus according to one embodiment of the subject disclosure.
FIG. 4 illustrates an electronic device for communication in a vehicle according to one embodiment of the subject disclosure.
FIG. 5 illustrates a method for communication in a vehicle according to one embodiment of the subject disclosure.
FIG. 6 illustrates another method for communication in a vehicle according to one embodiment of the subject disclosure.
FIG. 7 illustrates yet another method for communication in a vehicle according to one embodiment of the subject disclosure.
FIG. 8 is a diagrammatic representation of internal components of a computing system implementing the functionality as described herein.

### DETAILED DESCRIPTION

Before explaining the exemplary embodiments of the subject disclosure in more detail, certain general principles relating to the subject disclosure are briefly explained to assist in understanding the technology underlying the described examples.

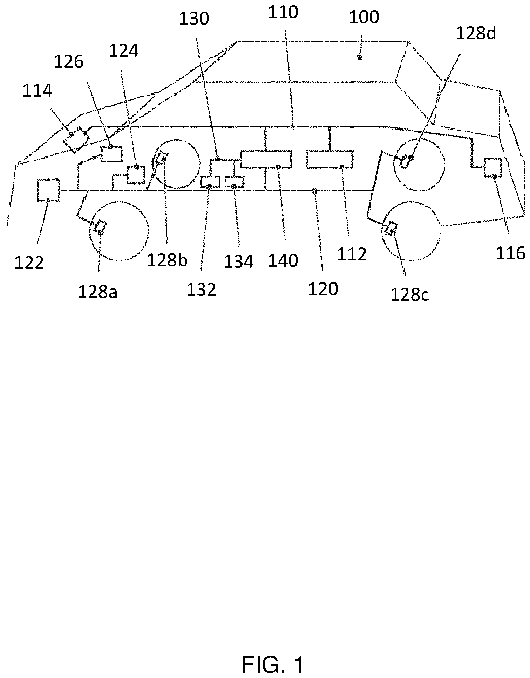

FIG. 1 shows a vehicle 100 with various electronic components according to one embodiment of the subject disclosure. For example, a passenger car is shown. However, any other vehicle may also be considered as vehicles. Examples of other vehicles comprise buses, commercial vehicles, especially trucks, agricultural machines, construction machines, motorcycles, rail vehicles, other moving systems such as storage lifters, etc. The subject disclosure is generally applicable to land vehicles, rail vehicles, water vehicles, and aircraft. The use is primarily intended for the field of vehicles. However, use in the field of field bus, i.e., in automation technology, process technology, etc., may also be considered.

In the vehicle 100, a plurality of electronic control units (ECUs) is used to control various functions of the vehicle 100. FIG. 1 shows the interconnection of some exemplary electronic control units and sensors. Basically, a distinction is made between three different classes of electronic control units, each of which is typically interconnected separately. The respective communication buses (also referred to as networks) are coupled to each other via a central gateway control unit 140 (e.g., a central gateway, a central control unit, etc.).

The electronic control units of a driver assistance control unit class are interconnected via the bus 110, for example. Coupled to the bus 110 are, for example, a driver assistance control unit 112, a radio detection and ranging (RADAR) control unit 114 and an ultrasonic sensor control unit 116. The RADAR control unit 114 is connected to one or more RADAR sensors and is used, for example, to implement one or more of a radar-based cruise control system, a radar-based distance warning system and a radar-based collision warning system. Additionally, or alternatively, a light detection and ranging (LIDAR) control unit with one or more LIDAR sensors connected thereto can also be used.

The electronic control units of a powertrain control unit class are interconnected, for example, via the bus 120. Coupled to the bus 120 are, for example, an engine control unit 122, an electronic stability programme (ESP) control unit 124, and a transmission control unit 126. Furthermore, one or more wheel speed sensors 128a - 128d may also be coupled to the bus 120.

The electronic control units of a chassis control unit class are interconnected via bus 130, for example. Coupled to the bus 130 are, for example, a chassis control unit 132 and a steering assistance control unit 134.

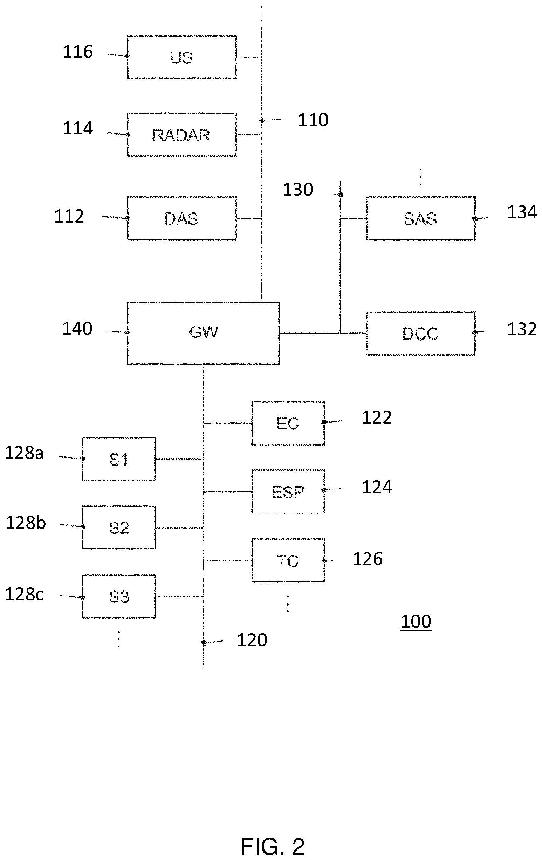

FIG. 2 shows a block diagram illustrating the various electronic components of the vehicle of FIG. 1 according to one embodiment of the subject disclosure. More specifically, the block diagram of FIG. 2 illustrates the electronic control units of the powertrain, chassis, and driver assistance control unit classes. The same reference numbers in FIG. 2 indicate the same components as in FIG. 1.

The three communication buses 110, 120, 130 illustrated in FIG. 2 are linear or serial buses. Such buses typically include low-cost buses. Examples include the Controller Area Network (CAN) bus, Local Interconnect Network (LIN) bus, FlexRay bus, or the like. The bus protocols for the communication buses 110, 120, and 130 may be designed to meet the functionalities and communication requirements of the electronic control devices interconnected therewith. For example, the communication bus 130 for the chassis control unit class could be designed with a higher data rate than the two communication buses 110 and 120 to be able to adapt the chassis extremely quickly to changing road conditions, if necessary.

For exchanging data between the electronic control units and sensors interconnected with the different communication buses 110, 120, 130, the gateway 140 is provided. The gateway 140 is coupled to all three communication bus systems 110, 120 and 130. The gateway 140 is designed to convert the data packets (or communications in general), which the gateway 140 receives via one of the communication busses, into a transmission format of another communication bus, and to forward the converted data packets via the other communication bus. As shown, the gateway 140 may be connected as a central device to both the communication bus 110, the communication bus 120, and the communication bus 130. The gateway 140 thus handles the format conversions for transmitting data packets between the different communication buses.

As described above, the bus protocols for the communication buses 110, 120, and 130 are designed to the needs of the interconnected electronic control units. For example, the use of the protocols may depend on the communication bus used in the vehicle 100 (such as the buses 110, 120, 130). For example, in the case of CAN or LIN, a transport protocol (or transport layer protocol) such as that standardized according to ISO standard ISO 15765-2 or derivatives thereof (also referred to as ISO-TP) can be used. Furthermore, for diagnostic services, i.e., services for managing ECUs and sensors, the UDS protocol (Unified Diagnostic Services) standardized according to ISO standard 14229, the KWP2000 protocol (Key-Word Protocol 2000) standardized according to ISO standard ISO 14230-3 and/or an OBD/OBD2-based protocol (On-board diagnostics-based protocol) standardized according to SAE J1979 or ISO 15031 can be used as diagnostic communication protocol.

The protocols are typically separated from and compatible with each other according to the layers of the ISO/OSI reference model. Typically, the protocols divide different tasks for secure communication into different layers according to the ISO model (International Organization for Standardization Model) or OSI model (Open Systems Interconnection Model). For this purpose, the protocols are separated from each other according to the layers of the ISO/OSI model but are compatible with each other.

The ISO/OSI model comprises seven layers. The first layer is a physical layer, the second layer is a data link layer, the third layer is a network layer, the fourth layer is a transport layer, the fifth layer is a session layer, the sixth layer is a presentation layer, and the seventh layer is an application layer.

Typically, these layers are used in the field of vehicles for transmitting commands, in particular diagnostic commands, and status updates, and for carrying out the method described hereafter, for performing software updates of the ECUs (referred to as ECU flashing). A vehicle bus such as CAN and LIN typically implement lower layers of the ISO/OSI reference model, such as the physical layer and the data link layer. Parts of the data link layer and higher layers such as network layer and transport layer are then usually realized by way of network protocols and protocol stacks on top of the vehicle bus, such as Ethernet/IP/TCP.

In connection with the use of the UDS protocol for the management of electronic components (i.e., ECUs and sensors) in a vehicle, the problem may arise that additional software at the application layer is used to perform software updates (e.g., ECU flashing). Communication with the additional software, e.g., to transmit the software update to the electronic component and initiate the update process on the electronic component, is done using the UDS protocol via the communication bus (e.g., CAN bus). This procedure leads to time delays (i.e., lag) and is only suitable to a limited extent, e.g., for manual updates.

The subject disclosure therefore provides access to an electronic component (e.g., ECU) in a vehicle by means of a protocol and protocol stack that allows another electronic component or a central control component to access the electronic component as a block device (also referred to as a network block device). A network block device as used herein is a network device which is configured to use a network block protocol. This enables the other electronic component or the central control component to access the electronic component in a manner similar to a local storage device (e.g., a hard disc) or partition thereof. In addition, the use of such a protocol at the application layer of the ISO/OSI model enables simplified and reliable communication using a transport protocol (e.g., ISO-TP) over a vehicle bus (e.g., CAN or LIN bus), especially for light-weight electronic components such as embedded systems with small operating systems (e.g., only a microkernel of a few hundred lines of code) or even no operating system at all. In addition, the subject disclosure reduces the number of protocols and avoids the need to use TCP/IP-compatible interfaces or TCP/IP-based implementations, thereby providing performance improvements and benefits in terms of hardware requirements.

Additionally, or alternatively, the electronic component may provide a protocol or protocol stack that allows the other electronic component or the central control component to access information (e.g., debug information) of a software component running on the electronic component. This allows the information of the running software component to be provided to the other electronic component or the central control component similar to information of a software component running locally thereon. The protocol may also allow the other electronic component or the central control component to modify data (e.g., input data for the software component) and control execution of the software component (e.g., set breakpoints, restart execution, stop execution, etc.).

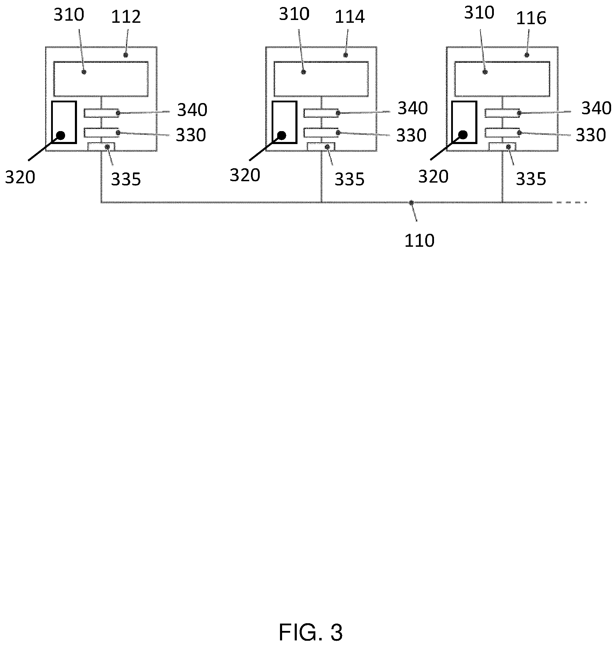

The subject disclosure is based on the principle described above of interconnected electronic components such as electronic control units and sensors in a vehicle by means of a communication bus (or vehicle bus) as shown in FIG. 3. In the example, the communication bus 110 is shown for the driver assistance control unit class. All electronic components (i.e., the control units 112, 114, 116) are connected to the communication bus 110. Also connected to the communication bus 110 is the gateway 140 (not shown). The bus structure of the communication bus 110 is linear or serial. For example, a twisted, unshielded two-wire line (e.g., unshielded twisted pair, UTP) can be used as the physical transmission medium (i.e., bus line) to which symmetrical differential voltages are applied for data transmission. The voltages represent symbols that a transmitter generates (encodes) according to the desired bit stream. A receiver in turn uses the resulting symbol stream to recover (decode) the bits the bit stream contains.

The electronic components (i.e., the electronic control devices 112, 114, 116) each typically comprise at least one processor 310 (e.g., a microcontroller) and at least one memory 320. The memory 320 stores program code representing application software that is executed by the processor 310. The memory 320 may also store data (e.g., input/output data of the application software, data required by or generated by the electronic components). Additionally, each electronic component has a communication interface (not shown) to the communication bus 110.

The communication interface is typically an interface to a vehicle bus (typically a low-cost bus such as CAN or LIN). Accordingly, the interface is expressed as a CAN or LIN bus interface. Such interfaces, and for that matter the electronic components as such, are typically not compatible with TCP/IP. In other words, the electronic components cannot establish a TCP/IP compatible connection (e.g., Ethernet, WiFi, etc.) to other electronic components. The communication interface includes or implements a physical layer block (physical layer, PHY) and a media access controller layer block (media access controller, MAC). The PHY block is responsible for converting digital packets originating from the MAC block into digital signals, which are then transmitted via the physical transmission medium (e.g., the twisted, unshielded two-wire line). The PHY block and the MAC block may each be implemented as separate circuits of the communication interface. In addition, the PHY block controls access to the transmission medium by ensuring that no two electronic components attempt to write to the transmission medium simultaneously.

In the example of FIG. 3, each electronic control unit 112, 114, 116 has a PHY circuit 330 connected to a circuit 335 for connection to the bus line. The electronic control units 112, 114, 116 also have a MAC circuit 340. In the above example, where the communication bus is a CAN bus, the PHY circuit 330 and the MAC circuit 340 perform functions and tasks of the CAN protocol or a CAN-based protocol such as CAN-FD or CAN-XL. The processor 310 executing applications typically also executes protocols of other layers of the ISO/OSI model, such as the ISO-TP as a transport protocol at the network layer and the transport layer, and other session layer and presentation layer protocols as appropriate. In some examples, the electronic control devices 112, 114, 116 may also include one or more additional circuits, each implementing one of the layers between the MAC layer and the application layer comprising the application executed by the processor 310.

In particular, the processor 310 implements an application layer network block protocol and thus acts as a network block device with respect to another electronic component, in particular a central control component. The other electronic component, such as a central vehicle controller, also implements the application layer network block protocol and accesses the network block protocol by means of exchanging messages (e.g., packets), with the access occurring on a block-by-block basis. By using the network block protocol, the other electronic component accesses the electronic component as if the electronic component were a local storage device or part thereof (e.g., a partition of the local storage device) of the other electronic component. Hence, utilizing the network block protocol enables, e.g., a central vehicle controller to access, read, write, and otherwise manipulate the storage of the electronic component over existing lower layer network infrastructure of the vehicle. In addition, the processor 310 may also implement a protocol at the application layer by which the electronic component provides information (e.g., debug information) of a software component running on the electronic component to another electronic component or the central control component.

Based on the foregoing principle of the subject disclosure, some embodiments of the subject disclosure are described below.

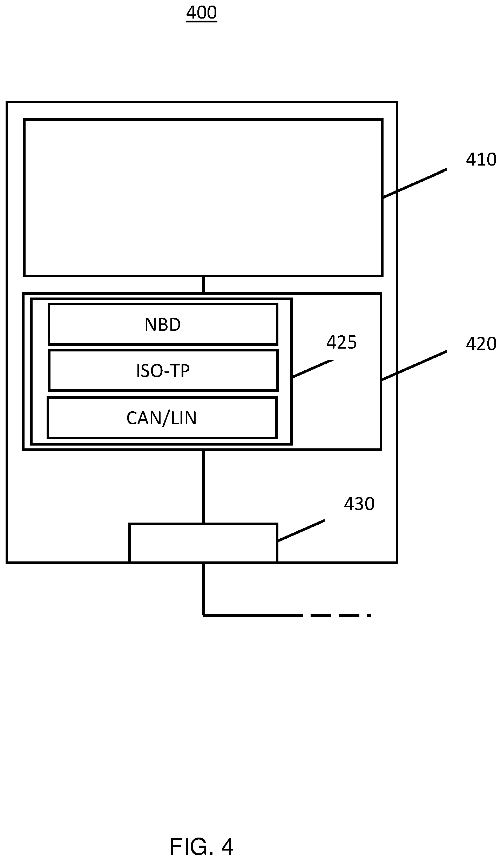

Referring to FIG. 4, an electronic device 400 according to one embodiment of the subject disclosure includes at least one processor 410 and at least one memory 420. The electronic device 400 may correspond to one of the electronic components shown in FIG. 3. The electronic device 400 is designed to control functions in a vehicle (not shown) and is coupled to a vehicle bus (e.g., the communication bus shown in FIG. 3). To couple to the vehicle bus, the electronic device 400 may have an interface 430. Examples of vehicle buses include serial buses and field buses, including but not limited to a CAN bus, a CAN-FD bus, a CAN-XL bus, a LIN bus, or the like. The interface 430, as described above, is typically a low-cost interface without TCP/IP functionality. Accordingly, the electronic device 400 is not configured to communicate with other electronic devices coupled to the vehicle bus via a TCP/IP based connection over the vehicle bus.

For the purposes of this description, vehicles are typically vehicles for land transportation, such as passenger cars or trucks that participate in public road traffic and use roads. However, it is to be understood that the subject disclosure is not limited thereto and relates, for example, to other vehicles for transport on land, such as motorcycles, as well as vehicles for water and air transport. The latter may comprise, for example, the use of the exemplary embodiments in an aircraft.

The memory 420 of the electronic device 400 stores program code 425 that, when executed by the processor 410, causes the electronic device 400 to implement a protocol stack. The protocol stack may be a protocol stack according to the ISO/OSI reference model, including an application layer, a transport layer, and a physical layer. Of course, for those skilled in the art, one or more of these layers may be implemented in hardware or a combination of hardware and software (i.e., the program code). In particular, the physical layer may be implemented by circuitry associated with the interface 430.

By means of the execution of the program code 425 by the processor 410, the electronic device 400 provides a network block protocol at the application layer. An example of a network block protocol is the Network Block Device (NBD) protocol developed for Unix-like operating systems. The network block protocol provides a service that generates messages according to the network block protocol based on a data input or data transfer. By implementing the network block protocol, the electronic device 400 acts as a server and makes itself or local storage device (e.g., a hard disk, a partition, a memory card, a flash memory, etc.) available for access by clients (e.g., the other electronic device or the central control component) via the vehicle bus. As a result of access using the network block protocol, for example by the client (e.g., a control device), messages are generated by the electronic device 400 according to the network block protocol. The messages include control messages such as messages for unmounting/mounting the electronic device 400 or a local storage device thereof as a network block device, and messages for writing or reading (at/from a given absolute address), and payload messages containing content read from the electronic device 400 or the local storage device or content to be written to the electronic device 400 or the local storage device. For example, the messages may include payload representing new or updated firmware to be transferred from the client to the electronic device 400 or local storage device to update the electronic device 400.

The exemplary NBD protocol is a binary protocol in which all multi-byte values are sent in network byte order, for example, corresponding to the memory organization of the electronic device 400.

The NBD protocol typically proceeds in two phases: the negotiation/initialization phase (also referred to as handshake) and the data phase.

During the initialization phase, data is exchanged between the NBD server (i.e., the electronic device 400) and the NBD client (i.e., the other electronic device or the central control component). The NBD protocol handshake can support one block device per port or multiple block devices over one port, and in the case of multiple block devices, the NBD client can select the block device using the name of the block device. The handshake is initiated by sending a Server Init Packet with the magic number of the network block protocol (NBD) from the NBD server to the NBD client. The NBD client responds to this with a reply, typically consisting of zero bits. The NBD server then sends a Client Init Packet to the NBD client, to which the NBD client responds with an Option Packet. The Option Packet typically defines one of several options, including: (1) the NBD client chooses block device names, (2) the NBD client wants to terminate the connection, or (3) the NBD client wants a list of exported block device names. The NBD server can accept or reject the requested option by sending a Reply Packet to the NBD client. The Reply Packet may include that: the NBD server accepts the requested option (ACK), the NBD server provides a description of the block device, the requested option is unknown to the NBD server, the requested option is known but not allowed, the requested option is syntactically invalid, or the NBD server does not support the requested option. The handshake ends as soon as the NBD server positively acknowledges a name of the block device selected by the NBD client, whereupon the NBD server sends a Device Init Packet to the NBD client with the identification data of the block device.

After the handshake has been completed, the data phase begins, during which the NBD client forwards the information about the size of the block device, any flags, and the open socket to the network block protocol (i.e., program code of the electronic device 400) via special system calls and then terminates itself. The network block protocol then handles further communication over the socket. The NBD client may now make read and write requests to the NBD server using an NBD Request. The NBD Request defines the type of access desired (e.g., read access, write access, controlled end of connection, flush cache, etc.), an offset in bytes from which to read or write, and a length of the data block. For write accesses, this is immediately followed by the data to be written. The NBD server responds to each request with a reply (NBD Reply). In the case of responses to read requests, this is immediately followed by the requested data.

Further, execution of the program code 425 by the processor 410 provides at the transport layer, a transport protocol (i.e., a transport layer protocol) and at the physical layer, a vehicle bus protocol (i.e., a physical layer protocol). Exemplary implementations include, but are not limited to, the ISO 15765-2 protocol (ISO-TP) as a transport protocol over vehicle busses such as the CAN bus and a CAN bus protocol (CAN, CAN-FD, CAN, XL) and a LIN bus protocol. The transport protocol at the transport layer provides a service for receiving the messages from the application layer, generating frames according to the transport protocol based on the messages from the application layer, and passing the generated frames to the physical layer. For example, frames are generated at the transport layer according to ISO-TP, which includes the messages according to the network block protocol as payload. The transport protocol also ensures that the network block protocol messages are appropriately converted (e.g., segmented or combined) so that their size corresponds to the size that can be transmitted as a payload in a frame of the transport protocol.

Correspondingly, at the physical layer, the vehicle bus protocol also provides a service for receiving the frames from the transport layer, generating symbols or signals according to the vehicle bus protocol based on the frames from the transport layer, and transmitting the generated symbols or signals to the receiver (i.e., the other electronic device or the central control component) via the vehicle bus. For example, symbols or signals are generated at the physical layer according to the CAN bus protocol, which include the frames according to the transport protocol as payload. The vehicle bus protocol also ensures that the frames of the transport protocol are appropriately converted (e.g., segmented or combined) so that their size corresponds to the size that can be transmitted in a time slot according to the vehicle bus protocol.

In the case of ISO-TP as an exemplary transport protocol, not only a maximum of 8 bytes as according to the CAN bus protocol as an exemplary physical protocol but 4095 bytes of user data can be transmitted. According to ISO-TP, the messages to be transmitted (e.g., the messages according to the network block protocol) are segmented into several frames and supplemented with metadata so that the messages can be interpreted and reassembled by the receiver. With ISO-TP, one byte is required per frame for protocol control information (Protocol Control Information, PCI) to send the corresponding ISO-TP frame type as well as a counter and status information. Other exemplary transport protocols comprise ISO-TP-based protocols such as ISO-FD and ISO-XL not limited to 4095 bytes and/or 8 bytes per message.

ISO-TP typically uses the following four frame types:
- Single Frame (SF): No segmented transmission has to take place, because only user data of 6 or 7 bytes have to be transmitted.
- First Frame (FF): A segmented transmission is started with a First Frame if more than 6 or 7 bytes have to be transmitted. Here no user data is sent yet, but the length of the entire telegram to be sent.
- Consecutive Frame (CF): After a First Frame, all segmented payload data are transmitted one after the other via Consecutive Frames.
- Flow Control Frame (FC): Allows the receiver to specify the method of transmission.

The transmission according to ISO-TP then proceeds according to the following scheme: The sender (e.g., the electronic device 400) starts the transmission with a First Frame. The receiver (e.g., the other electronic device or the central control component) confirms with a Flow Control Frame, in which the receiver defines the maximum possible number of consecutive CFs that the receiver can receive, as well as the time intervals at which the CFs must be sent. The sender transmits a block of CFs (based on the specifics defined by the receiver in its first FC), which is again acknowledged by the receiver with an FC. The transmission and acknowledgement of CF blocks is repeated until all user data has been transmitted.

The frames generated by ISO-TP are transmitted via the vehicle bus according to the CAN bus protocol (or the vehicle bus protocol in general). That is, the frames according to ISO-TP are converted into symbols or signals according to the CAN bus protocol, which are then transmitted via the CAN bus to the receiver.

The combined utilization of NBD at the application layer and ISO-TP at the transport layer running on top of a vehicle bus such as CAN or LIN allows a unified and simplified control of light-weight electronic components in the vehicle which are not required to implement more sophisticated lower layer protocols such as Ethernet, IP, and/or TCP which would pose too much overhead and load on such smaller electronic components.

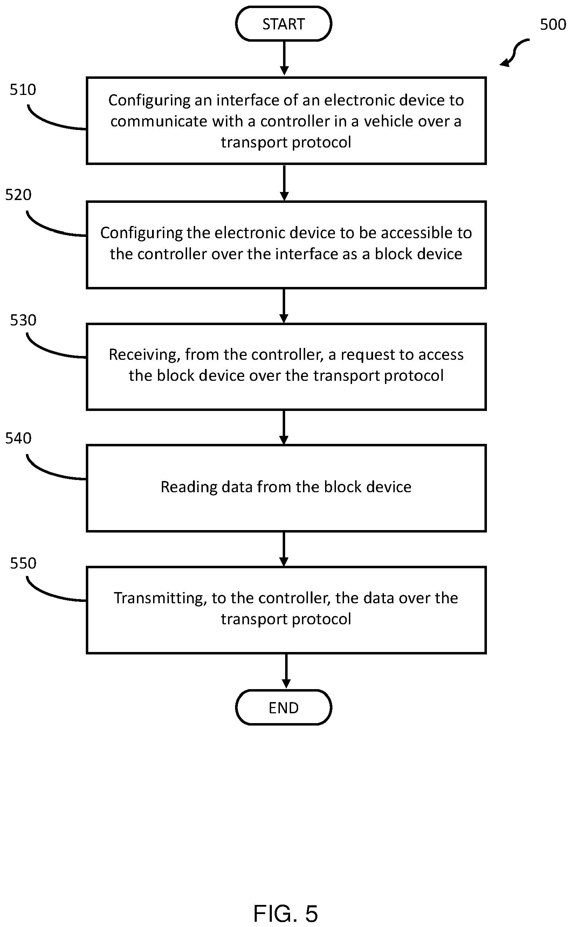

With reference to FIGS. 5 to 7, methods for communication in a vehicle according to embodiments of the subject disclosure will now be described.

FIG. 5 illustrates a method for communication in a vehicle according to one embodiment of the subject disclosure.

The method 500 may be performed by the electronic device 400 described above with reference to FIG. 4 having at least one interface 430, at least one processor 410 and at least one memory 420. The electronic device 400 is installed to control functions in a vehicle and is coupled via the at least one interface 430 to a vehicle bus. In addition, the memory 420 comprises stored program code, the execution of which by the processor 410 results in the execution of the method described below.

As described above, the electronic device 400 is coupled to and communicates with the other electronic device or the central control component via the vehicle bus. Examples of the other electronic device or central control component include an electronic control unit (ECU) or an electronic control module (ECM) for controlling one or more electrical systems of the vehicle that is embedded in the vehicle, and/or a controller of the vehicle such as a central vehicle controller.

Examples of vehicle buses include serial buses and field buses, including but not limited to the CAN bus, the CAN-FD bus, the CAN-XL bus, the LIN bus, or the like. The interface 430 is typically a low-cost interface incompatible with TCP (i.e., without TCP/IP functionality). In other examples, the interface 430 is compatible with a transport protocol (e.g., a protocol different than TCP or a protocol according to the ISO standard ISO 15765-2 or variants thereof). In yet other examples, the interface 430 is compatible with CAN or LIN and/or may support communication over CAN or LIN.

The method 500 begins by configuring the interface 430 (or the electronic device 400) to communicate with the controller in the vehicle over a transport protocol (block 510). Examples of the transport protocol comprises one of a transport protocol different than TCP, a transport protocol according to the ISO standard ISO 15765-2 or a transport protocol according to a variant of the ISO standard ISO 15765-2.

More specifically, at block 510, the interface 430 may be configured to implement at least part of a protocol stack according to the ISO/OSI reference model. The interface 430 may be configured to implement the transport protocol at the transport layer of the protocol stack. Additionally, the interface 430 may be configured to implement one or more protocols for communication through the vehicle bus (e.g., CAN, LIN, etc.) at the physical layer of the protocol stack. Thereby, as it will be described below in more detail, the interface 430 may be configured to communicate transmission units (e.g., frames, packets, symbols, signals, etc.) according to the transport protocol through the vehicle bus and/or transmission units (e.g., frames, packets, symbols, signals, etc.) according to the protocols for communication through the vehicle bus.

Configuring the interface 430 or the electronic device 400 to communicate with the controller in the vehicle over the transport protocol (i.e., block 510) may be performed during initialization or start-up of the electronic device 400. That is, once the electronic device 400 is power-up, the electronic device 400 starts with loading and executing an initial firmware such as a Basis Input Output System (BIOS) or Unified Extensible Firmware Interface (UEFI) to provide runtime services for operating systems and programs and to perform hardware initialization. The initial firmware initializes and tests hardware components of the electronic device 400 (Power-on self-test) and loads a boot loader from a memory or storage device such as a boot ROM of the electronic device 400. The boot loader may then initialize a kernel of an operating system (e.g., a Unix-like operating system such as Linux, FreeBSD, etc.). The kernel (e.g., a monolithic kernel or a micro-kernel) may include program code (i.e., the program code is compiled into the kernel) or load program code (i.e., the program code is included in a module, which is loaded by the kernel using a reference) that is executed to configure the transport protocol and initialize the interface 430. For example, the program code may implement the protocol stack including the transport protocol. In another example, the interface 430 may be configured at block 510 by loading and executing an interface firmware using a processing resource associated with the interface 430 (e.g., a processor coupled with the interface 430). In this example, the interface 430 may be configured on power-up independent of the firmware (i.e., BIOS or UEFI) of the electronic device 400 or the operating system.

Furthermore, the method 500 includes configuring the electronic device 400 to be accessible to the controller over the interface as a block device (block 520). For example, the electronic device 400 or the interface 430 may be configured at block 520 to implement a network block protocol such as the NBD protocol described above. More specifically, the electronic device 400 or the interface 430 may be configured to implement the network block protocol at the application layer of the protocol stack such that the electronic device 400 or the interface 430 is enabled to communicate transmission units (e.g., frames, packets, symbols, signals, etc.) according to the network block protocol.

Configuring the electronic device 400 to be accessible to the controller over the interface as a block device (i.e., block 520) may also be performed during initialization or start-up of the electronic device 400. For example, the kernel of the operating system may further include or load program code that is executed by the electronic device 400 to initialize the electronic device 400 to implement the network block protocol and start a service for accessing the block device. The service (e.g., a server) may be configured to listen on a port of the interface 430 for requests to access the block device and initialize access and communication to itself or to one or more physical or logical storage devices of the electronic device 400.

Due to configuring the electronic device 400 at block 520, the electronic device 400 may act as a server with respect to the controller, which acts as a client. The electronic device 400 may provide read and/or write access to the controller. For example, the electronic device 400 may provide access to itself or to one or more physical or logical storage devices of the electronic device 400 (e.g., a storage device connected to the electronic device 400 or part thereof such as a partition of the storage device). In this case, configuring the electronic device 400 at block 520 may include configuring the one or more physical or logical storage devices to be accessible as the block device.

Herein, accessing the electronic device 400 and/or the one or more physical or logical storage devices of the electronic device 400 as the block device is to be understood as accessing in a block-wise manner. For example, the accessing concerns reading and/or writing one or more blocks of bytes. Typically, the one or more blocks have a fixed block size such as 512, 1024, 2048, 4096 bytes. Other examples of the block size may include other granularities such as 1 byte or up to 4 gigabytes.

At block 530, the electronic device 400 receives a request to access the block device over the transport protocol from the controller. In the above examples, the request may include a request according to the network block protocol, received over the transport protocol. For example, the electronic device 400 may receive, at the physical layer, a transmission unit according to the protocol for communication through the vehicle bus. At the physical layer, the electronic device 400 may demodulate the transmission unit according to the protocol for communication through the vehicle bus to obtain a transmission unit according to the transport protocol. The electronic device 400 may provide the transmission unit according to the transport protocol to the transport layer. At the transport layer, the electronic device 400 may demodulate the transmission unit according to the transport protocol to obtain a transmission unit according to the network block protocol. The electronic device 400 may provide the transmission unit according to the network block protocol to the application layer. At the application layer, the electronic device 400 may demodulate the transmission unit according to the network block protocol to obtain the request to access the block device.

Upon receiving the request to access the block device at block 530, the electronic device 400 accesses the block device in accordance with the request.

For example, if the request to access is a request to read data (i.e., one or more blocks of bytes) from the block device, the electronic device 400 reads the data from the block device (block 540) and transmits the data over the transport protocol to the controller (block 550).

In some examples, the electronic device 400 may read the data from the block device (block 540) and modulate a transmission unit according to the network block protocol using the data. For example, the electronic device 400 may generate the transmission unit according to the network block protocol including the data or at least part of the data as payload (e.g., generate one or more messages according to the network block protocol). Modulating the transmission unit according to the network block protocol may be performed at the application layer. The electronic device 400 may then provide the transmission unit according to the network block protocol to the transport layer, where a transmission unit according to the transport protocol is modulated (e.g., generate one or more frames according to the transport protocol). The transmission unit according to the transport protocol may include the transmission unit according to the network block protocol or at least part thereof as payload. The electronic device 400 may then provide the transmission unit according to the transport protocol to the physical layer, where a transmission unit according to the protocol for communication through the vehicle bus is modulated (e.g., generate transmission units for transmission through the vehicle bus). The transmission unit according to the protocol for communication through the vehicle bus may include the transmission unit according to the transport protocol or at least part thereof as payload. The electronic device 400 may then transmit the transmission unit according to the protocol for communication through the vehicle bus over the vehicle bus to the controller.

In another example, the request to access may be a request to write data (i.e., one or more blocks of bytes) to the block device. In this example, the electronic device 400 receives data to be written to the block device from the controller over the transport protocol and write the received data to the block device.

For example, the electronic device 400 may receive, at the physical layer, a transmission unit according to the protocol for communication through the vehicle bus, the transmission unit is to transport the data to be written. At the physical layer, the electronic device 400 may demodulate the transmission unit according to the protocol for communication through the vehicle bus to obtain a transmission unit according to the transport protocol. The electronic device 400 may provide the transmission unit according to the transport protocol to the transport layer. At the transport layer, the electronic device 400 may demodulate the transmission unit according to the transport protocol to obtain a transmission unit according to the network block protocol. The electronic device 400 may provide the transmission unit according to the network block protocol to the application layer. At the application layer, the electronic device 400 may demodulate the transmission unit according to the network block protocol to obtain the data to be written to the block device. In response to obtaining, the data is written to the block device.

In some examples, the data may comprise software code (e.g., a firmware for operating the electronic device, a software for implementing functions on the electronic device, or the like). The request to access may be a request to flash the block device. The electronic device 400 may flash the block device using the software code. For example, the electronic device 400 may write the software code to the block device to overwrite or update existing software code on the block device. In response to flashing the block device, the electronic device 400 may initiate a restart/reboot procedure to use the software code written to the block device.

The request to access may also include a request to establish a session for accessing the block device. In this example, the electronic device 400 may perform a handshake procedure to establish a session for accessing the block device between the electronic device 400 and the controller. As part of the handshake procedure, the electronic device 400 and the controller may exchange and/or negotiate session parameters, keys to be used by de-/encryption procedures, or the like. Furthermore, the handshake procedure may include authenticating/authorizing the controller at the electronic device 400.

In some examples, the electronic device 400 may perform a de-/encryption procedure to de-/encrypt data using an encryption key shared by the electronic device 400 and the controller. For example, the electronic device 400 may perform an encryption procedure to encrypt data read from the block device prior to transmitting the data over the transport protocol to the controller. Likewise, the electronic device 400 may perform a decryption procedure to decrypt data to be written to the block device upon receiving the data over the transport protocol from the controller. In some examples, the electronic device 400 may use a cryptographic protocol such as a Transport Layer Security (TLS) based protocol to perform the de-/encryption procedure. For example, the electronic device 400 may implement, at the application layer, the TLS-based protocol between the network block protocol and the transport protocol.

As will be described in more detail below, the method 500 may further include receiving a single byte response having a byte value from the controller. The single byte response is transmitted by the controller in response to transmitting the data read from the block device at block 550. Upon receiving the single byte response, the electronic device 400 may determine whether the byte value matches a byte value reserved according to the transport protocol for an acknowledgment of reception of the transmitted data or for indicating a valid transmission of the data. Responsive to determining the match, additional data may be transmitted over the transport protocol (i.e., block 550). Otherwise, the data previously transmitted may be transmitted again.

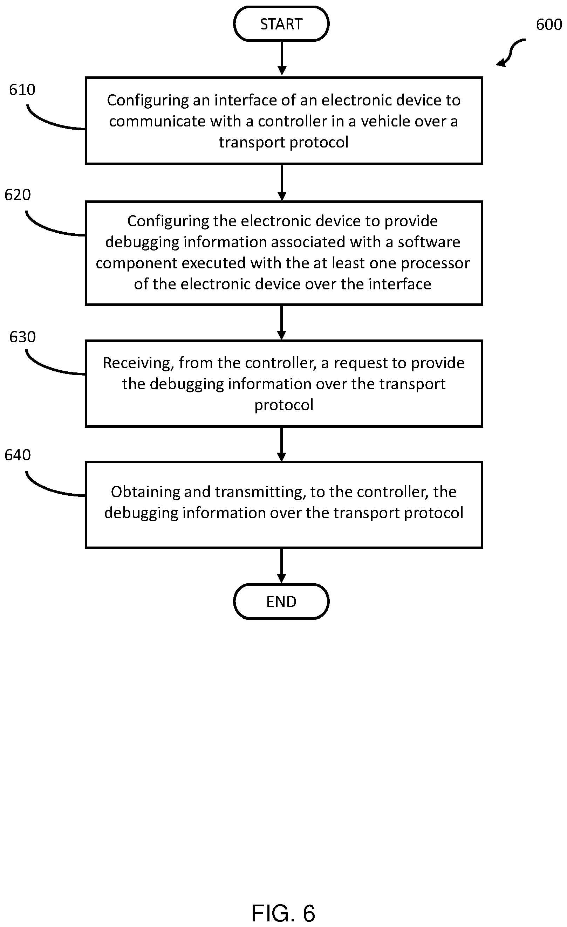

FIG. 6 illustrates another method for communication in a vehicle according to one embodiment of the subject disclosure. The method illustrated in FIG. 6 may be performed alternatively, or additionally, to the method illustrated in FIG. 5.

The method 600 may be performed by the electronic device 400 described above with reference to FIG. 4 having at least one interface 430, at least one processor 410 and at least one memory 420. The electronic device 400 is installed to control functions in a vehicle and is coupled via the at least one interface 430 to a vehicle bus. In addition, the memory 420 comprises stored program code, the execution of which by the processor 410 results in the execution of the method described below.

The method 600 begins by configuring the interface 430 (or the electronic device 400) to communicate with the controller in the vehicle over a transport protocol (block 610). Examples of the transport protocol comprises one of a transport protocol different than TCP, a transport protocol according to the ISO standard ISO 15765-2 or a transport protocol according to a variant of the ISO standard ISO 15765-2.

More specifically, at block 610, the interface 430 may be configured to implement at least part of a protocol stack according to the ISO/OSI reference model. The interface 430 may be configured to implement the transport protocol at the transport layer of the protocol stack. Additionally, the interface 430 may be configured to implement one or more protocols for communication through the vehicle bus (e.g., CAN, LIN, etc.) at the physical layer of the protocol stack. Thereby, as it will be described below in more detail, the interface 430 may be configured to communicate transmission units (e.g., frames, packets, symbols, signals, etc.) according to the transport protocol through the vehicle bus and/or transmission units (e.g., frames, packets, symbols, signals, etc.) according to the protocols for communication through the vehicle bus.

Furthermore, the method 600 includes configuring the electronic device 400 to provide debugging information associated with a software component executed with the at least one processor 410 of the electronic device 400 over the interface (block 620). For example, the electronic device 400 or the interface 430 may be configured at block 620 to implement a remote debugging protocol. More specifically, the electronic device 400 or the interface 430 may be configured to implement the remote debugging protocol at the application layer of the protocol stack such that the electronic device 400 or the interface 430 is enabled to communicate transmission units (e.g., frames, packets, symbols, signals, etc.) according to the remote debugging protocol.

At block 630, the electronic device 400 receives a request to provide the debugging information. For example, the electronic device 400 may receive, at the physical layer, a transmission unit according to the protocol for communication through the vehicle bus. At the physical layer, the electronic device 400 may demodulate the transmission unit according to the protocol for communication through the vehicle bus to obtain a transmission unit according to the transport protocol. The electronic device 400 may provide the transmission unit according to the transport protocol to the transport layer. At the transport layer, the electronic device 400 may demodulate the transmission unit according to the transport protocol to obtain a transmission unit according to the remote debugging protocol. The electronic device 400 may provide the transmission unit according to the remote debugging protocol to the application layer. At the application layer, the electronic device 400 may demodulate the transmission unit according to the remote debugging protocol to obtain the request to provide the debugging information. The request may include information about the software component for which the debugging information is to be provided.

Upon receiving the request to provide the debugging information at block 630, the electronic device 400 obtain the debugging information generated during execution of the software component and transmits the debugging information over the transport protocol to the controller (block 640). For example, the electronic device 400 may obtain the debugging information while the software component is executed or the electronic device 400 may access the debugging information stored during execution of the software component.

In some examples, the electronic device 400 may access the debugging information and modulate a transmission unit according to the network block protocol using the debugging information. For example, the electronic device 400 may generate the transmission unit according to the remote debugging protocol including the debugging information or at least part of the debugging information as payload (e.g., generate one or more messages according to the remote debugging protocol). Modulating the transmission unit according to the remote debugging protocol may be performed at the application layer. The electronic device 400 may then provide the transmission unit according to the remote debugging protocol to the transport layer, where a transmission unit according to the transport protocol is modulated (e.g., generate one or more frames according to the transport protocol). The transmission unit according to the transport protocol may include the transmission unit according to the network block protocol or at least part thereof as payload. The electronic device 400 may then provide the transmission unit according to the transport protocol to the physical layer, where a transmission unit according to the protocol for communication through the vehicle bus is modulated (e.g., generate transmission units for transmission through the vehicle bus). The transmission unit according to the protocol for communication through the vehicle bus may include the transmission unit according to the transport protocol or at least part thereof as payload. The electronic device 400 may then transmit the transmission unit according to the protocol for communication through the vehicle bus over the vehicle bus to the controller.

The method 600 may further include one or more of the operations described above with reference to method 500.

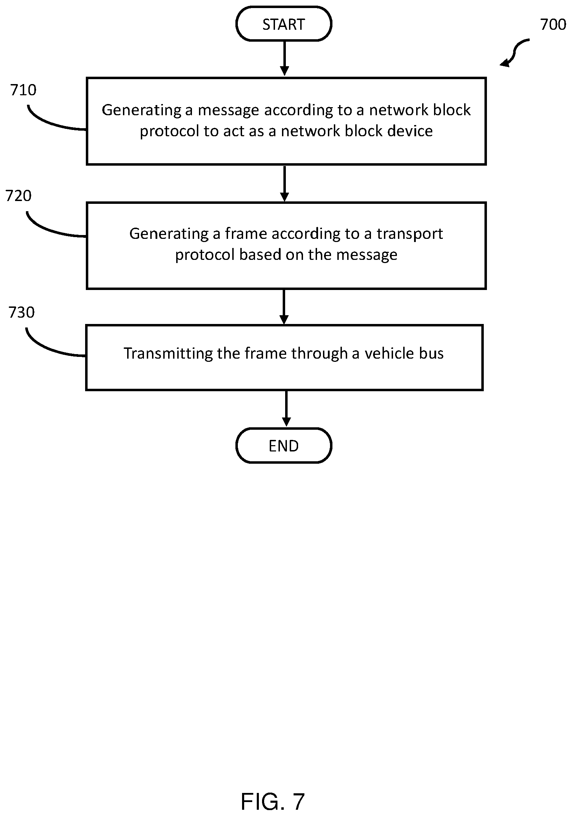

FIG. 7 illustrates yet another method for communication in a vehicle according to one embodiment of the subject disclosure.

The method 700 may be performed by the electronic device 400 described above with reference to FIG. 4 having at least one processor 410 and at least one memory 420. The electronic device 400 is installed to control functions in a vehicle and is coupled to a vehicle bus. In addition, the memory 420 comprises stored program code, the execution of which by the processor 410 results in the execution of the method described below. As described above, the electronic device is coupled to and communicates with the other electronic device or the central control component via the vehicle bus. Examples of the other electronic device or central control component include an electronic control unit (ECU) or an electronic control module (ECM) for controlling one or more electrical systems of the vehicle that is embedded in the vehicle, and/or a controller of the vehicle such as a central vehicle controller.

The method 700 begins by generating one or more messages of a network block protocol at the electronic device (block 710). In one example, the network block protocol may include the NBD protocol described above. By way of the messages, the electronic device acts as a network block device with respect to the other electronic device or the central control component (e.g., the controller of the vehicle). More specifically, the electronic device acts as a server with respect to the other electronic device or the central control component, which acts as a client. The electronic device provides access (read/write access) to the electronic device (i.e., to itself) or a storage device connected to the electronic device or part thereof (e.g., a partition of the storage device) to the client by means of the generated messages.

Based on the messages, the electronic device then generates one or more frames according to a transport protocol (block 720). An example of the transport protocol includes a protocol at the transport layer (i.e., a transport layer protocol) such as the ISO-TP (e.g., ISO 15765-2) described above. It will be understood by those skilled in the art that ISO-TP is merely one example, and that other transport protocols may be present except for TCP/IP protocol, which is typically no supported by the electronic device. Possible examples include transport protocols based on ISO 15765-2 or derived therefrom. Generating the one or more frames according to the transport protocol includes segmenting the messages according to the network block protocol and packing them as a payload into frames of a size suitable for transmission over the vehicle bus. Additionally, generating the one or more frames may further comprise adding metadata to the frames to enable the payload to be reassembled correctly by the receiver (i.e., the other electronic device or the central control component).

Thereafter, the generated frames are transmitted via the vehicle bus from the electronic device to the other electronic device or the central control component (block 730). Transmission here may include converting the frames to symbols, signals, or frames according to a vehicle bus protocol, and then transmitting the symbols, signals, or frames over the vehicle bus. An example of a vehicle bus includes the CAN bus, or the LIN bus described above. Accordingly, the symbols or signals to be transmitted can correspond to the CAN bus protocol or the LIN bus protocol (i.e., a protocol at the physical layer).

For simplicity of description, the above exemplary method 700 is directed only to sending from the electronic device (acting as the server) to the other electronic device or the central control component (acting as the client). However, it is apparent to the person skilled in the art that receiving communication from the other electronic device or the central control component (client) at the electronic device (server) is done in the reverse direction. In particular, the receiving from the client includes receiving one or more frames according to the transport protocol via the vehicle bus, extracting the payload (i.e., messages according to the network block protocol) from the one or more frames and, if necessary, reassembling the messages correctly, and forwarding the messages to the network block protocol (i.e., the application layer) for processing. Moreover, it is equally apparent to the skilled person that the above-described method 700 for sending and receiving is also performed by the other electronic device or the central control component (client) to generate, receive and process messages according to the network block protocol (e.g., provide requests to the server as described above).

A further embodiment of the above-described method 700 or the electronic device 400 implementing the above-described method 700 includes the electronic device acting as a server for the network block device with respect to the other electronic device or the central control component and providing a logical or physical storage device coupled to the electronic device as the network block device. For example, the electronic device may provide a local storage device or a portion of the local storage device (e.g., an area, a partition, etc.) as a network block device. Other examples of such storage devices include any type of storage device such as flash memory, Random Access Memory (RAM), Solid State Disk (SSD), etc. Consequently, the generated messages according to the network block protocol concern access (read/write access) to these physical or logical storage devices, which are thus provided as network block devices for access by the other electronic device or the central control component through the electronic device acting as the server.

Accessing the network block device in accordance with the network block protocol or generating the messages in accordance with the network block protocol, may be a response to a corresponding request by the other electronic device or central control component. For this purpose, the block 710may be preceded by the electronic device (i.e., the server) receiving from the other electronic device or central control component (i.e., the client) a request to access the network block device. As described above in connection with the NBD protocol as an exemplary network block protocol, the client may send an NBD request to the server to, for example, read a block of data, starting at a predetermined offset, or write data to a location defined by means of an offset from the network block device. Accordingly, exemplary requests by the client may include requests to read one or more blocks of the network block device (e.g., from a given absolute address of the network block device), and requests to write one or more blocks to the network block device (e.g., to a given absolute address of the network block device). In this case, the messages generated by the server according to the network block protocol (i.e., block 710) include a corresponding response, such as the NBD Reply described above.

Further, as described above in connection with the NBD protocol, the procedure according to method 700 may be preceded by going through a corresponding handshake procedure or handshake phase to establish a session between the electronic device as the server and the other electronic device or the central control component as the client. The handshake procedure or handshake phase may correspond to the NBD handshake described above and may be initiated by the receipt of a connection request by the other electronic device or the central control component. For the person skilled in the art, the packets for requests/responses exchanged during the handshake procedure or handshake phase are also messages according to the network block protocol, which go through the described sequence according to the method 700 for transmission via the vehicle bus, i.e., are transmitted as payload in frames according to the transport protocol via the vehicle bus.

Furthermore, the messages can be subjected to encryption before the messages serve as the basis for generating the frames according to the transport protocol. For example, the encryption may precede the transport layer and thus the transport protocol. Examples of suitable encryption include the TLS protocol.

TLS consists of two main components: TLS Handshake and TLS Record. In TLS Handshake, secure key exchange and authentication takes place. TLS Record then uses the symmetric key negotiated in TLS Handshake for secure data transmission (i.e., messages according to the network block protocol are encrypted and transmitted with a Message Authentication Code (MAC) protected against modification, i.e., forwarded to the transport protocol). In other words, the messages are encrypted by means of a symmetric encryption procedure using a shared encryption key before the messages encrypted in this way serve as the basis for generating the frames according to the transport protocol. For encryption (e.g., according to an encryption protocol), the other electronic device or the central control component (as the client) may first establish a connection with the electronic device (as the server). The electronic device (server) authenticates itself to the other electronic device or the central control component (client) with a certificate, which is checked for trustworthiness or compliance with the name of the electronic device (for example). Likewise, the other electronic device or the central control component can authenticate itself to the electronic device with its own certificate. After successful verification, a secret random number encrypted with the public key of the electronic device is sent. In other embodiments, a Diffie-Hellman key exchange calculation is performed by both communication partners to arrive at a shared secret from which a cryptographic key can then be derived. This key is subsequently used to encrypt all messages in the connection using the symmetric encryption method and secured by a MAC to protect message integrity and authenticity.

In a further embodiment, the method 700 may comprise the electronic device receiving an acknowledgement because of the transmission of one or more frames over the vehicle bus. In this regard, the acknowledgement for receiving one of the frames may comprise a single byte having a predetermined byte value. After receiving such a byte, the electronic device checks whether the byte value corresponds to a byte value that, according to the transport protocol, corresponds to an acknowledgement of receipt of a transmitted frame or an indication of transmission of a valid frame. If the verification is successful, the electronic device transmits another frame according to the transport protocol via the vehicle bus to the other electronic device or the central control component. Otherwise, the electronic device can retransmit the transmitted frame or perform error handling, possibly terminate the session, or disconnect.

Although the above embodiments have been described with reference to a network block protocol, it is to be understood that the subject disclosure is also applicable to a remote debugging protocol. Thus, the above-described messages generated at block 710 may also correspond to messages according to a remote debugging protocol used to provide debugging information to the other electronic device or the central control component. In this case, the debugging information typically relates to one or more software or software components executed using the at least one processor by the electronic device. Also in this case, based on the messages according to the remote debugging protocol, frames are generated according to the transport protocol (i.e., block 720), which are then in turn transmitted via the vehicle bus to the other electronic device or the central control component. This makes it possible, for example, to provide GDB (i.e., the GNU Debugger) known from UNIX-like operating systems or remote executable variants of GDB and/or DAP (Debug Adapter Protocol) in a vehicle via the vehicle bus (such as CAN or LIN).

In the case of the remote debugging protocol, for example, it may be necessary for the other electronic component or the central control component to respond to the receipt of a frame according to the transport protocol via the vehicle bus with a response comprising a single ACK/NACK packet. For this purpose, it may be sufficient to send a response consisting of a single byte with a value of 0x41 for ACK and 0x40 for NACK. These merely exemplary values are reserved for ACK/NACK in ISO-TP (for example). Alternatively, other reserved byte values such as 0x33 0x01 and 0x33 0x00 or other single byte values or a sequence thereof such as 0x33 / 0x34 can be used. It would also be advantageous, for example, to reinterpret byte values that are already reserved but not required for respective case (i.e., the network block protocol or the remote debugging protocol), such as 0x30 0x00 0x00 for the continue-to-send message according to ISO-TP as ACK or 0x32 0x00 0x00 for the abort message according to ISO-TP as NACK.

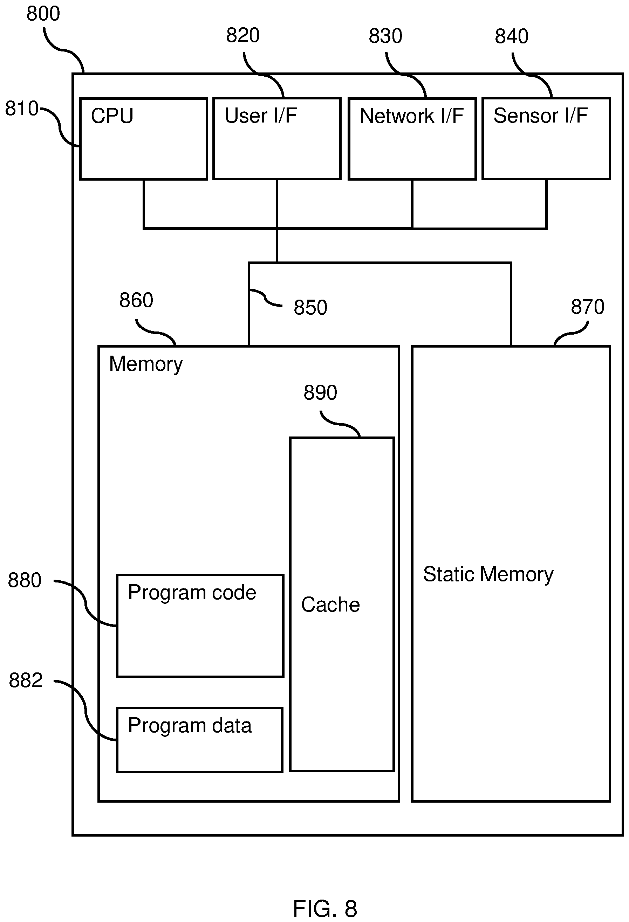

FIG. 8 is a diagrammatic representation of internal components of a computing system 600 implementing the functionality as described herein.

The computing system 800 may be in the vehicle and includes at least one processor 810, a user interface 820, a network interface 830 and a main memory 860, that communicate with each other via a bus 850. Optionally, the computing system 800 may further include a static memory 870 and a disk-drive unit (not shown) that also communicate with each via the bus 850. A video display, an alpha-numeric input device and a cursor control device may be provided as examples of the user interface 820.

Furthermore, the computing system 800 may also comprise a sensor interface 840 to communicate with a sensor of the vehicle. Alternatively, the computing system 600 may communicate with the sensor via the network interface 830. The sensor obtains the image. The sensor may be a radar sensor, a laser scanner, a light detection and ranging (LIDAR) sensor, or the like. The computing system 800 may also be connected to database systems (not shown) via the network interface 830, wherein the database systems store additional data needed for providing the functionalities as described herein. The network interface 830 also connects the computing system 800 to a vehicle bus (e.g., CAN or LIN) via which the computing system 800 communicates with other computing systems connected to the vehicle bus.

The main memory 860 may be a random-access memory (RAM) and/or any further volatile memory. The main memory 860 may store program code 880 for performing the exemplary method described herein. The memory 860 may also store additional program data 882 required for providing the functionalities as described herein. Part of the program data 882 and/or the program code 880 may also be stored in a separate, e.g., cloud memory and executed at least in part remotely. In such an exemplary embodiment, the memory 860 may store the segment encoding module and the correlation encoding module as described herein in a cache 890.

Computer readable storage media, which are inherently non-transitory, may include volatile and non-volatile, and removable and non-removable tangible media implemented in any method or technology for storage of information, such as computer-readable instructions, data structures, program modules, or other data. Computer readable storage media may further include random access memory (RAM), read-only memory (ROM), erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer.

A computer readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or to an external computer or external storage device via a network.

It should be appreciated that while particular embodiments and variations have been described herein, further modifications and alternatives will be apparent to persons skilled in the art. In particular, the examples are offered by way of illustrating the principles, and to provide a number of specific methods and arrangements for putting aspects of the subject disclosure into effect.

In certain embodiments, the functions and/or acts specified in the flow charts, sequence diagrams, and/or block diagrams may be re-ordered, processed serially, and/or processed concurrently without departing from the scope of the invention. Moreover, any of the flowcharts, sequence diagrams, and/or block diagrams may include more or fewer blocks than those illustrated consistent with embodiments of the invention.

The terminology used herein is for the purpose of describing particular embodiments only and is not intended to be limiting of the embodiments of the subject disclosure. It will be further understood that the terms "comprise" and/or "comprising," when used in this specification, specify the presence of stated features, integers, activities, operations, elements, and/or components, but do not preclude the presence or addition of one or more other features, integers, activities, operations, elements, components, and/or groups thereof. Furthermore, to the extent that the terms "include", "having", "has", "with", "comprised of", or variants thereof are used in either the detailed description or the claims, such terms are intended to be inclusive in a manner similar to the term "comprising".

While a description of various embodiments has illustrated all the subject disclosure and while these embodiments have been described in considerable detail, it is not the intention to restrict or in any way limit the scope of the appended claims to such detail. Additional advantages and modifications will readily appear to those skilled in the art. The subject disclosure in its broader aspects is therefore not limited to the specific details, representative apparatus and method, and illustrative examples shown and described. Accordingly, the described embodiments should be understood as being provided by way of example, for the purpose of teaching the general features and principles, but should not be understood as limiting the scope, which is as defined in the appended claims.

## Claims

1. An electronic device in a vehicle, comprising:
at least one interface to a vehicle bus;
at least one processor; and
at least one memory including program code, wherein the program code causes the electronic device, when executed with the at least one processor, to:
- configure the interface to communicate with a controller in the vehicle over a transport protocol;
- configure the electronic device to be accessible to the controller over the interface as a block device;
- upon receiving, from the controller, a request to access the block device over the transport protocol:
- read data from the block device; and
- transmit, to the controller, the data over the transport protocol.

2. The electronic device of claim 1, wherein the program code further causes the electronic device, when executed with the at least one processor, to:
- upon receiving, from the controller, the request to access the block device over the transport protocol:
- receive data from the controller over the transport protocol; and
- write the data to the block device.

3. The electronic device of claim 1, wherein the data comprises software code and the program code further causes the electronic device, when executed with the at least one processor, to:
- flash to the block device with the software code.

4. The electronic device of any one of claims 1 to 3, wherein the program code further causes the electronic device, when executed with the at least one processor, to:
- upon receiving, from the controller, the request to access the block device over the transport protocol:
- perform a handshake procedure to establish a session for accessing the block device between the electronic device and the controller.

5. The electronic device of any one of claims 1 to 4, wherein the program code causes the electronic device, when executed with the at least one processor, to:
- perform a de-/encryption procedure to de-/encrypt the data using an encryption key shared by the electronic device and the controller.

6. The electronic device of any of claims 1 to 5, further comprising:
one or more physical or logical storage devices, wherein the program code causes the electronic device, when executed with the at least one processor, to:
- configure the one or more physical or logical storage device to be accessible as the block device.

7. The electronic device of any of claims 1 to 6, wherein the program code causes the electronic device, when executed with the at least one processor, to:
- configure the electronic device to use a network block protocol to be accessible over the interface.

8. The electronic device of any of claims 1 to 7, wherein the data comprises one or more blocks of bytes of a fixed block size; and/or wherein the electronic device comprises an electronic control module, ECM, for controlling one or more electrical systems in the vehicle, the ECM being embedded in the vehicle; and/or wherein the controller comprises a central vehicle controller.

9. The electronic device of any of claims 1 to 8, wherein the transport protocol comprises one of: a transport protocol different than the Transmission Control Protocol, TCP, and a transport protocol according to the ISO standard ISO 15765-2; and/or
wherein the vehicle bus comprises a Controller Area Network, CAN, or a Local Interconnect Network, LIN.

10. The electronic device of claim 9, wherein the interface comprises one of: an interface being incompatible with TCP, an interface compatible with the transport protocol according to the ISO standard ISO 15765-2, and an interface compatible with CAN or LIN.

11. The electronic device of any of claims 1 to 10, wherein the program code further causes the electronic device, when executed with the at least one processor, to:
- receive, from the controller in response to transmitting the data, a single byte response having a byte value;
- determine whether the byte value matches a byte value reserved according to the transport protocol for an acknowledgment of reception of the transmitted data or for indicating a valid transmission of the data; and
- responsive to determining the match, transmit additional data over the transport protocol.

12. The electronic device of any of claims 1 to 11, wherein the program code further causes the electronic device, when executed with the at least one processor, to:
- configure the electronic device to provide debugging information associated with a software component executed with the at least one processor of the electronic device over the interface;
- upon receiving, from the controller, a request to provide the debugging information:
- transmit, to the controller, the debugging information over the transport protocol.

13. A computer-implemented method for communication in a vehicle, comprising:
- configuring an interface of an electronic device to communicate with a controller in the vehicle over a transport protocol;
- configuring the electronic device to be accessible to the controller over the interface as a block device;
- upon receiving, from the controller, a request to access the block device over the transport protocol:
- reading data from the block device; and
- transmitting, to the controller, the data over the transport protocol.

14. A computer program product comprising instructions which, when the computer program product is executed by a computer, cause the computer to carry out the method of claim 13.

15. A computer-readable data carrier having stored thereon the computer program product of claim 14.
